# EUROPÄISCHE PATENTSCHRIFT

(11) **EP 0 809 905 B1**
(45) Veröffentlichungstag und Bekanntmachung des Hinweises auf die Patenterteilung: **02.04.2003**
(21) Anmeldenummer: 96900841.6
(22) Anmeldetag: 23.01.1996
(51) Int. Cl.: H04L 9/18

(54) **VERSCHLÜSSELUNGSVORRICHTUNG**
ENCODING DEVICE
DISPOSITIF DE CODAGE

(30) Priorität: 15.02.1995 DE 19505097
(43) Veröffentlichungstag der Anmeldung: 03.12.1997
(73) Patentinhaber: Infineon Technologies AG, 81669 München (DE)
(72) Erfinder: REINER, Robert, D-82008 Unterhaching (DE)
(74) Vertreter: Fischer, Volker, Dipl.-Ing.
(86) Internationale Anmeldenummer: DE9600094
(87) Internationale Veröffentlichungsnummer: WO96025813

(56) Entgegenhaltungen:
- EP-A- 0 314 148
- EP-A- 0 384 478

## Beschreibung

Bei Datenübertragungen zwischen zwei Einheiten eines Systems, beispielsweise zwischen einem beweglichen Teil, wie einer Chipkarte und einem stationären Teil, wie einem Lesegerät, wird es zunehmend wichtiger, die zu übertragenden Daten zu verschlüsseln, da die Kenntnis der übertragenen Daten einem Betrüger die Möglichkeit geben würde, einen durch die Datenübertragung gesteuerten Vorgang zu manipulieren. Ein Verschlüsselungsvorgang kann derart stattfinden, daß zunächst von einer der Einheiten ein Datum zur anderen Einheit gesendet wird, welches dort mittels einer Verschlüsselungsvorrichtung verschlüsselt wird. Das verschlüsselte Datum wird dann von der verschlüsselnden Einheit zur sendenden Einheit zurückgesandt. In der versendenden Einheit wird nun das verschlüsselte Datum entweder entschlüsselt, wobei bei einem solchen Vorgehen sowohl symmetrische als auch asymmetrische Algorithmen verwendet werden können, oder aber auf dieselbe Weise wie im beweglichen Teil verschlüsselt und mit dem empfangenen verschlüsselten Datum verglichen.

Das zuletzt genannte Verfahren kann zwar nicht der Übertragung beliebiger Information dienen, da der letztendliche Empfänger die Information schon kennen muß, sie kann jedoch in besonders vorteilhafter Weise zur Authentifikation dienen, da das bewegliche Teil, das das empfangene Datum verschlüsselt und an das stationäre Teil zurücksendet, damit nachweisen muß, daß es über den richtigen Verschlüsselungsalgorithmus beziehungsweise die richtige Verschlüsselungsvorrichtung verfügt und sich somit ausweisen kann. In gleicher Weise kann natürlich auch eine Authentifikation des stationären Teils bzw. Lesegeräts stattfinden, da nur dann, wenn beide Teile über dieselbe Verschlüsselungsvorrichtung bzw. denselben Verschlüsselungsalgorithmus verfügen, das in beiden Teilen verschlüsselte Datum beim Vergleich eine positive Übereinstimmung ergibt.

Für die meisten Verschlüsselungsalgorithmen, bei denen im Empfänger das verschlüsselte Datum wieder entschlüsselt wird, sind komplizierte Recheneinheiten nötig, die meist mit einem Mikroprozessor und einem speziellen Coprozessor gebildet sind, und einer erheblichen Rechenzeit bedürfen. Sehr viel einfacher sind Pseudozufallsgeneratoren, mit denen jedoch nur das obengenannte zweite Verfahren durchgeführt werden kann, da die Verschlüsselung eines Eingangsdatums eines solchen Pseudozufallsgenerators nicht mehr rückgängig gemacht werden kann und somit in beiden Teilen eines Systems nur der Verschlüsselungsvorgang durchgeführt werden kann und die Ergebnisse der beiden Verschlüsselungsvorgänge miteinander verglichen werden können.

Als Eingangsdaten für eine Verschlüsselungsvorrichtung dienen üblicherweise ein zu verschlüsselndes Datum sowie ein geheimer Code. Zu einer Erhöhung der Sicherheit können jedoch auch weitere Daten, insbesondere zeitlich veränderbare Daten wie Zählerinhalte, beispielsweise von einem Fehlerzähler, herangezogen werden. All diese Eingangsdaten werden mittels eines geheimzuhaltenden Algorithmus zu verschlüsselten Ausgangsdaten verarbeitet. Der Algorithmus kann dabei wie im Beispiel des Schieberegisters hardwaremäßig realisiert sein, zum Beispiel durch logische Verknüpfung einer Anzahl der im Schieberegister vorliegenden Zustände.

Da die Daten in jedem Fall in digitaler Form vorliegen, ist zu ihrer Verschlüsselung ein Taktsignal notwendig, das die einzelnen Vorgänge synchronisiert. Aus der Anzahl der bei einem Verschlüsselungsvorgang auftretenden Impulse des Taktsignals könnte nun ein Betrüger versuchen, Rückschlüsse auf die Art des Verschlüsselungsvorgangs zu ziehen.

Die EP 0314 148 A2, die ein Datenübertragungssystem aus Chipkarte und externen Terminal beschreibt, schlägt vor, nach jedem Prozeßkommando des Terminals an die Chipkarte eine vorgegebene Zeit bis zur Antwort verstreichen zu lassen.

Darüber hinaus ist aus der EP 0 384 478 A2 ein Verfahren zum Ver- und Entschlüsseln eines Nachrichtenstromes bekannt, das eine Verschlüsselungseinheit und ein Ausgaberegister verwendet. Das Verfahren sieht vor, jeden Nachrichtenblock zweimalig ganzblockweise zu schlüsseln, wobei die zweite Verschlüsselung in umgekehrter Reihenfolge als die erste Verschlüsselung stattfindet.

Die Aufgabe der Erfindung ist es somit, eine Verschlüsselungsvorrichtung anzugeben, bei der die für die Erzeugung eines Verschlüsselungsergebnisses nötige Zeit aus dem Taktsignal nicht erkannt werden kann.

Die Aufgabe wird durch eine Verschlüsselungsvorrichtung gemäß dem Anspruch 1 gelöst. Vorteilhafte Weiterbildungen der Erfindung sind in den Unteransprüchen angegeben.

Die Erfindung wird nachfolgend anhand eines Ausführungsbeispiel mit Hilfe von Figuren näher erläutert. Dabei zeigen:
- Figur 1: das Blockschaltbild einer speziellen erfindungsgemäßen Verschlüsselungsvorrichtung und
- Figur 2: eine Ausgestaltungsvariante eines Teils der erfindungsgemäßen Verschlüsselungsvorrichtung.

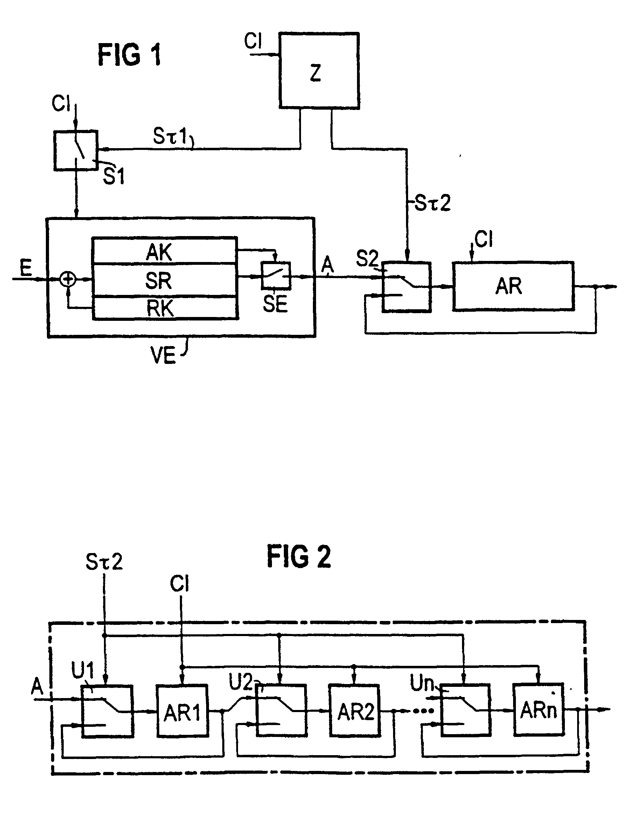

Figur 1 zeigt eine erfindungsgemäße Verschlüsselungsvorrichtung, die als Kern eine Verschlüsselungseinheit VE enthält. Dieser Verschlüsselungseinheit VE werden Eingangsdaten E zugeführt. Diese Eingangsdaten E werden im gezeigten Beispiel seriell zugeführt und bestehen beispielsweise aus einem zu verschlüsselnden Eingangsdatum, einem geheimen Code, sowie weiteren, vorzugsweise zeitvariablen Daten, wie beispielsweise dem aktuellen Stand eines Fehlerzählers. Es wäre natürlich jederzeit auch möglich, diese Daten parallel zuzuführen und sie in irgendeiner Art und Weise logisch zu verknüpfen. Im gezeigten Beispiel ist die Verschlüsselungseinheit VE mit einem Schieberegister SR gebildet, dem eine Rückkopplungseinheit RK zugeordnet ist. Diese Rückkopplungseinheit RK verknüpft bestimmte logische Zustände innerhalb des Schieberegisters SR und führt das Resultat dieser Verknüpfung zum Eingang des Schieberegisters SR zurück, wo es mit den Eingangsdaten E verknüpft, beispielsweise zu diesen addiert, wird. Dem Schieberegister SR ist weiterhin eine Auskopplungseinheit AK zugeordnet, die bestimmte Zustände des Schieberegisters SR nicht linear verknüpft und das Ergebnis dieser Verknüpfung, die beispielsweise eine Multiplikation sein kann, einem Schaltelement SE zuführt, das durch dieses von der Auskoppeleinheit AK stammende Signal angesteuert wird. Über dieses Schaltelement SE werden die Ausgangsdaten des Schieberegisters SR dem Ausgang der Verschlüsselungseinheit VE als Ausgangsdaten A zugeführt.

Das Schieberegister SR erzeugt also abhängig von den Eingangsdaten E und der hardwaremäßigen Realisierung der Rückkopplungseinheit RK eine kontinuierliche Folge von Datenbits, von denen jedoch nur einige, abhängig von der Auskoppeleinheit AK dem Ausgang der Verschlüsselungseinheit VE als Ausgangsdaten A zugeführt werden.

Diese Ausgangsdaten A werden einem ersten Eingang eines Schalters S2 zugeführt, dessen Ausgang mit dem Eingang eines Ausgaberegisters AR verbunden ist. Der Ausgang dieses Ausgaberegisters AR bildet zum einen den Ausgang der Verschlüsselungsvorrichtung und ist zum anderen auf einen zweiten Eingang des Schalters S2 zurückgeführt. Das Ausgaberegister kann dabei sowohl ein serielles Register wie beispielsweise ein Schieberegister sein aber auch ein paralleles Register, in das beispielsweise mit einem Multiplexer eingeschrieben wird, sein. In diesem Ausgaberegister AR werden die Ausgangsdaten A zwischengespeichert und können erst nach Ablauf des Verschlüsselungsvorgangs ausgelesen werden. Um eine Synchronizität der Verschlüsselungseinheit VE und des Ausgaberegisters AR zu gewährleisten, ist beiden Elementen der erfindungsgemäßen Verschlüsselungsvorrichtung ein Taktsignal Cl zugeführt. Der Verschlüsselungseinheit VE wird das Taktsignal Cl jedoch über einen Schalter S1 zugeführt. Die beiden Schalter S1 und S2 werden jeweils von einem Signal angesteuert, das von Mitteln zum Erzeugen bestimmte Zeitspannen andauernder Signale Sτ1, Sτ2 stammt. Hierbei wird der Schalter S1 von dem Signal Sτ1 angesteuert, das eine Zeitspanne τ1 andauert. Der Schalter S2 wird von dem Signal Sτ2 angesteuert, der eine Zeitspanne τ2 andauert, die innerhalb der Zeitspanne τ1 liegt. Das Mittel Z kann in vorteilhafter Weise mit einem Zähler ausgeführt sein, der nach Erreichen bestimmter einstellbarer Zeitspannen τ1, τ2 jeweils Signale Sτ1, Sτ2 abgibt, um die Schalter S1, S2 zu betätigen. Diesen Zählermitteln Z ist zu diesem Zweck ebenfalls das Taktsignal Cl zugeführt.

Die Verschlüsselungsvorrichtung erfolgt nun folgendermaßen: Beim Einschalten sind der Schalter S1 geschlossen und der Schalter S2 in der Stellung, daß der Ausgang der Verschlüsselungseinheit VE mit dem Eingang des Ausgaberegisters AR verbunden ist. Synchron mit dem Taktsignal Cl beginnt nun die Verschlüsselungseinheit VE Ausgabedaten A zu erzeugen, die in das Ausgaberegister AR über den Schalter S2 eingeschrieben werden. Nach Ablauf der Zeitdauer τ2 ändert das Signal Sτ2 seinen Zustand, so daß der Schalter S2 umgeschaltet wird und nun der Ausgang des Ausgaberegisters AR über den Umschalter S2 mit seinem Eingang verbunden ist. Der Schalter S1 bleibt weiterhin geschlossen, da die Zeitspanne τ1 größer ist als die Zeitspanne τ2. Die Verschlüsselungseinheit VE erzeugt somit weiterhin Ausgabedaten A, die jedoch nicht mehr in das Ausgaberegister AR eingeschrieben werden und somit nichts zum verschlüsselten Datenwort beitragen. Stattdessen werden die Daten im Ausgaberegister AR im Kreis geschoben. Nach Ablauf der Zeitspanne τ1 ändert sich der Zustand des Signals Sτ1, so daß der Schalter S1 geöffnet wird und die Verschlüsselungseinheit VE kein Taktsignal mehr erhält und somit keine Ausgabedaten A mehr erzeugen kann.

Ein Beobachter dieses Verschlüsselungsvorganges kann von außen nur die Stromaufnahme des die Verschlüsselungsvorrichtung enthaltenden Halbleiterchips messen und daraus Rückschlüsse auf die Dauer des Verschlüsselungsvorgangs ziehen. Da das Taktsignal Cl jedoch der Verschlüsselungsvorrichtung länger zugeführt wird, als der eigentliche Verschlüsselungsvorgang andauert und auch die Stromaufnahme des Ausgaberegisters nicht unterbunden wird, da auch diesem weiterhin Taktsignale zugeführt werden und somit die Daten im Kreis geschoben werden, ist es ihm nicht möglich, die Dauer des tatsächlichen Verschlüsselungsvorgangs zu ermitteln.

Die Werte der Zeitspanne τ1 und τ2 können in einem nichtflüchtigen Speicher der neben der Verschlüsselungsvorrichtung ebenfalls in dem Halbleiterchip enthalten sein kann, abgespeichert sein und werden jeweils zu Beginn eines Verschlüsselungsvorgangs in den Zähler Z geladen. Sie stellen neben dem der Verschlüsselungseinheit VE zugeführten geheimen Code die Geheimdaten der Verschlüsselungsvorrichtung dar und sollten mittels geeigneter Sicherheitsvorkehrungen von außen unzugänglich sein.

Es wäre auch denkbar, dem Zähler Z eine dritte Zeitspanne zuzuführen, wobei die Zeitspanne τ2 erst nach der dritten Zeitspanne nach dem Beginn der ersten Zeitspanne τ1 zu laufen beginnt.

In Figur 2 ist eine Alternative zu dem in der Figur 1 dargestellten Ausgaberegister AR in Verbindung mit dem Schalter S2 dargestellt. Das Ausgaberegister AR ist dabei in mehrere Teile AR1...ARn unterteilt, denen jeweils ein Umschalter U1...Un zugeordnet ist. Hierbei wird das Ausgabedatum A der Verschlüsselungseinheit VE einem ersten Eingang des ersten Umschalters U1 zugeführt, wobei der Ausgang dieses ersten Umschalters U1 mit dem Eingang des ersten Ausgaberegisterteils AR1 verbunden ist. Der Ausgang des ersten Ausgaberegisterteils AR1 ist zum einen mit einem ersten Eingang des zweiten Umschalters U2 und zum anderen mit dem zweiten Eingang des ersten Umschalters U1 verbunden. In gleicher Weise sind die weiteren Umschalter U2...Un und Ausgaberegisterteile AR2...ARn verbunden. Der Ausgang des Ausgaberegisterteils ARn bildet den Ausgang des gesamten Ausgaberegisters. Jedem der Umschalter U1...Un ist das die zweite Zeitspanne τ2 andauernde Signal Sτ2 zugeführt. Außerdem ist jedem der Ausgaberegister AR1...ARn das Taktsignal Cl zugeführt. Bei dieser Variante eines Ausgaberegisters wird nicht der gesamte Inhalt dieses Ausgaberegisters durch das gesamte Register geschoben, sondern nur durch einzelne Teile. Im Extremfall kann es sich bei diesen Teilen nur um ein einzelnes Bit handeln, so daß die Reihenfolge der im Ausgaberegister stehenden verschlüsselten Ausgabedatums auch nach Ablauf der zweiten Zeitspanne τ2 nicht mehr geändert wird.

Das Ausgaberegister AR muß in dem in den Figuren 1 und 2 dargestellten Fällen als Schieberegister ausgebildet sein, jedoch ist diese Ausführung von Ausgaberegistern für eine Realisierung des der Erfindung zugrunde liegenden Gedankens nicht zwingend. Die Grundbedingung ist nur, daß sich die Stromaufnahme des Ausgaberegisters auch nach Ablauf der zweiten Zeitspanne τ2 nicht ändert, so daß ein Beobachter von außen nicht erkennen kann, ab wann keine Daten mehr in das Ausgaberegister eingeschrieben werden.

## Patentansprüche

1. Verschlüsselungsvorrichtung
- mit einer Verschlüsselungseinheit (VE), die zumindest einen Dateneingang und zumindest einen Datenausgang sowie einen Takteingang, der mit einem Taktsignal (C1) beaufschlagbar ist, aufweist,
- mit einem Ausgaberegister (AR), das einen Dateneingang und einen Datenausgang sowie einen Takteingang, der mit dem Taktsignal (Cl) beaufschlagbar ist, aufweist,
- wobei ein Datenausgang der Verschlüsselungseinheit (VE) mit dem Dateneingang des Ausgaberegisters (AR) gekoppelt ist,
**dadurch gekennzeichnet, daß**
- der Takteingang der Verschlüsselungseinheit (VE) über einen ersten Schalter (S1) mit einem Taktsignal (Cl) beaufschlagbar ist,
- der Datenausgang der Verschlüsselungseinheit (VE) mit dem Dateneingang des Ausgaberegisters (AR) über einen zweiten Schalter (S2) verbunden ist,
- Mittel (Z) zum Erzeugen einer ersten Zeitspanne (τ1) und einer zweiten Zeitspanne (τ2), die den ersten Schalter (S1) beziehungsweise den zweiten Schalter (S2) ansteuern, vorgesehen sind,
- wobei die zweite Zeitspanne (τ2) innerhalb der ersten Zeitspanne (τ1) liegt,
- wobei während der ersten Zeitspanne (τ1) von der von dem Taktsignal (C1) getakteten Verschlüsselungseinheit (VE) aus den Eingangsdaten (E) Ausgangsdaten (A) erzeugt und während der zweiten Zeitspanne (τ2) diese Ausgangsdaten (A) von der Verschlüsselungseinheit (VE) über den zweiten Schalter (S2) in das Ausgaberegister (AR) übertragen werden.

2. Verschlüsselungsvorrichtung nach Anspruch 1,
**dadurch gekennzeichnet,**
**daß** die Mittel (Z) zum Erzeugen einer ersten und einer zweiten Zeitspanne (τ1, τ2) mit einem einstellbaren Zähler gebildet sind, der mit einem, mit dem Taktsignal (C1) beaufschlagbaren Takteingang versehen ist.

3. Verschlüsselungsvorrichtung nach Anspruch 1 oder 2,
**dadurch gekennzeichnet,**
**daß** das Ausgaberegister (AR) als Schieberegister ausgebildet ist, daß der zweite Schalter (S2) ein Umschalter mit zwei Eingängen und einem Ausgang ist, und daß der Datenausgang des Ausgaberegisters (AR) mit dem zweiten Eingang des Umschalters (S2) verbunden ist.

4. Verschlüsselungsvorrichtung nach Anspruch 3,
**dadurch gekennzeichnet,**
**daß** das Schieberegister in mehrere Schieberegisterteile (AR1...ARn) unterteilt ist, daß jedem Schieberegisterteil (AR1...ARn) ein Umschalter (U1...Un) zugeordnet ist, dessen Ausgang mit dem Eingang und dessen zweiter Eingang mit dem Ausgang des Schieberegisterblocks (A1...A1n) und der erste Eingang mit dem Ausgang des vorgeschalteten Schieberegisterblocks beziehungsweise der Verschlüsselungseinheit (VE) verbunden ist, wobei jeder Umschalter (U1...Un) von den Zeitspanneerzeugungsmitteln (Z) angesteuert ist.

5. Verschlüsselungsvorrichtung nach einem der vorangehenden Ansprüche, **dadurch gekennzeichnet,**
**daß** die Verschlüsselungseinheit (VE) ein rückgekoppeltes Schieberegister (SR) mit einer diesem zugeordneten nichtlinearen Auskoppeleinheit (AK) ist.

6. Verschlüsselungsvorrichtung nach einem der vorangehenden Ansprüche, **dadurch gekennzeichnet,**
**daß** das Ausgaberegister nicht vorzeitig ausgelesen werden kann.

## Revendications

1. Dispositif de codage
- comprenant une unité (VE) de codage, qui a au moins une entrée pour les données et au moins une sortie pour les données ainsi qu'une entrée d'horloge qui peut être alimentée par un signal (C1) d'horloge,
- comprenant un registre (AR) de sortie, qui a une entrée pour les données et une sortie pour les données ainsi qu'une entrée d'horloge qui peut être alimentée par le signal (C1) d'horloge,
- une sortie pour les données de l'unité (VE) de codage étant couplée à l'entrée pour les données du registre (AR) de sortie,
**caractérisé en ce que**
- l'entrée d'horloge de l'unité (VE) de codage peut être alimentée en un signal (C1) d'horloge par un premier commutateur (S1),
- la sortie pour les données de l'unité (VE) de codage est reliée à l'entrée pour les données du registre (AR) de sortie par un deuxième commutateur (S2),
- il est prévu des moyens (Z) de production d'un premier laps de temps (τ1) et d'un deuxième laps de temps (τ2), qui commandent le premier commutateur (S1) et respectivement le deuxième commutateur (S2),
- le deuxième laps de temps (τ2) est compris dans le premier laps de temps (τ1),
- pendant le premier laps de temps (τ1) il est produit par l'unité (VE) de codage cadencée par le signal (C1) d'horloge des données (A) de sortie à partir des données (E) d'entrée tandis que pendant le deuxième laps de temps (τ2), ces données (A) de sortie sont transmises de l'unité (VE) de codage au registre (AR) de sortie en passant par le deuxième commutateur (S2).

2. Dispositif de codage suivant la revendication 1,
**caractérisé en ce que** les moyens (Z) de production d'un premier et d'un deuxième laps de temps (τ1, τ2) sont formés d'un compteur réglable qui est muni d'une entrée d'horloge pouvant être alimentée par le signal (C1) d'horloge.

3. Dispositif de codage suivant la revendication 1 ou 2,
**caractérisé en ce que** le registre (AR) de sortie est constitué en registre à décalage, **en ce que** le deuxième commutateur (S2) est un inverseur ayant deux entrées et une sortie et **en ce que** la sortie pour les données du registre (AR) de sortie est reliée à la deuxième entrée de l'inverseur (S2).

4. Dispositif de codage suivant la revendication 3,
**caractérisé en ce que** le registre à décalage est subdivisé en plusieurs parties (AR1 ... ARn) de registre à décalage, **en ce qu'**il est associé à chaque partie (AR1 ... ARn) de registre à décalage un inverseur (U1 ... Un) dont la sortie est reliée à l'entrée et dont la deuxième entrée est reliée à la sortie du bloc (A1 ... A1n) de registre à décalage et la première entrée à la sortie du bloc de registre de décalage monté en amont respectivement de l'unité (VE) de codage, chaque inverseur (U1 ... Un) étant commandé par les moyens (Z) de production de laps de temps.

5. Dispositif de codage suivant l'une des revendications précédentes,
**caractérisé en ce que** l'unité (VE) de codage est un registre (SR) à décalage à réaction ayant une unité (AK) de découplage non linéaire qui lui est associée.

6. Dispositif de codage suivant l'une des revendications précédentes,
**caractérisé en ce que** le registre de sortie ne peut pas être lu de manière anticipée.

## Claims

1. Scrambling apparatus
- having a scrambling unit (VE) which has at least one data input and at least one data output as well as a clock input to which a clock signal (C1) can be applied,
- having an output register (AR) which has a data input and a data output as well as a clock input to which the clock signal (C1) can be applied,
- with one data output of the scrambling unit (VE) being connected to the data input of the output register (AR),
**characterized in that**
- a clock signal (C1) can be applied to the clock input of the scrambling unit (VE) via a first switch (S1),
- the data output of the scrambling unit (VE) is connected to the data input of the output register (AR) via a second switch (S2),
- means (Z) are provided for producing a first time interval (τ1) and a second time interval (τ2) which respectively drive the first switch (S1) and the second switch (S2),
- with the second time interval (τ2) being located within the first time interval (τ1),
- with output data (A) being produced from the input data (E) by the scrambling unit (VE), which is clocked by the clock signal (C1), during the first time interval (τ1), and this output data (A) being transferred from the scrambling unit (VE) via the second switch (S2) to the output register (AR) during the second time interval (τ2).

2. Scrambling apparatus according to Claim 1,
**characterized**
**in that** the means (Z) for producing a first and a second time interval (τ1, τ2) are formed by an adjustable counter, which is provided with a clock input to which the clock signal (C1) can be applied.

3. Scrambling apparatus according to Claim 1 or 2,
**characterized**
**in that** the output register (AR) is in the form of a shift register, in that the second switch (S2) is a changeover switch with two inputs and one output, and
**in that** the data output of the output register (AR) is connected to the second input of the changeover switch (S2).

4. Scrambling apparatus according to Claim 3,
**characterized**
**in that** the shift register is subdivided into a number of shift register parts (AR1...ARn), in that each shift register part (AR1...ARn) has an associated changeover switch (U1...Un) whose output is connected to the input and whose second input is connected to the output of the shift register block (A1...A1n) and the first input is connected to the output of the upstream shift register block and/or to the scrambling unit (VE), with each changeover switch (U1...Un) being driven by the time interval producing means (Z).

5. Scrambling apparatus according to one of the preceding claims,
**characterized**
**in that** the scrambling unit (VE) is a feedback shift register (SR) with a nonlinear output unit (AK) associated with it.

6. Scrambling apparatus according to one of the preceding claims,
**characterized**
**in that** the output register cannot be read prematurely.
